# EUROPÄISCHE PATENTSCHRIFT

(11) **EP 2 766 941 B1**
(45) Veröffentlichungstag und Bekanntmachung des Hinweises auf die Patenterteilung: **07.12.2016**
(21) Anmeldenummer: 12784487.6
(22) Anmeldetag: 11.10.2012
(51) Int. Cl.: H01M 2/10, H01M 2/20, H01M 10/613, H01M 10/625, H01M 10/647, H01M 10/6553, H01M 10/6556

(54) **ELEKTRISCHER ENERGIESPEICHER**
ELECTRICAL ENERGY ACCUMULATOR
ACCUMULATEUR D'ÉNERGIE ÉLECTRIQUE

(30) Priorität: 13.10.2011 AT 14852011
(43) Veröffentlichungstag der Anmeldung: 20.08.2014
(73) Patentinhaber: AVL List GmbH, 8020 Graz (AT)
(72) Erfinder: KLAMMLER, Kurt, 8163 Fladnitz (AT); MICHELITSCH, Martin, 8062 Kumberg (AT); STUETZ, Harald, 8102 Semriach (AT); NIEDERL, Dietmar, 8091 Jagerberg (AT); UREM, Oliver, 8600 Bruck/Mur (AT)
(74) Vertreter: Babeluk, Michael
(86) Internationale Anmeldenummer: PCT/EP2012/070191
(87) Internationale Veröffentlichungsnummer: WO 2013/053842

(56) Entgegenhaltungen:
- EP-A2- 1 505 670
- WO-A2-2010/031856
- JP-A- 2007 265 945

## Beschreibung

Die Erfindung betrifft einen elektrischen Energiespeicher, insbesondere für ein Elektrofahrzeug, welcher eine Vielzahl an elektrisch miteinander verbundenen, insbesondere flachen und im wesentlichen plattenförmigen Batteriezellen aufweist, welche in zumindest einem Stapel nebeneinander oder übereinander angeordnet sind, wobei die Zellpole von zumindest zwei elektrisch miteinander verschalteten Batteriezellen durch zumindest einen Zellverbinder miteinander verbunden sind, wobei zumindest ein Zellpol und zumindest ein Zellverbinder miteinander verbunden sind, wobei zumindest der mit dem Zellverbinder verbundene Zellpol in eine erste Ebene normal zur Zellebene der Batteriezellen umgebogen ist. Weiters betrifft die Erfindung ein Verfahren zur Fertigung eines elektrischen Energiespeichers.

Aus der DE 10 2009 035463 A1 ist eine Batterie mit einer Vielzahl von flachen im wesentlichen plattenförmigen Batterieeinzelzellen bekannt. Die Batterieeinzelzellen sind zu einem Zellenstapel gestapelt und mit einem Batteriegehäuse umgeben. Die Batterieeinzelzellen sind dabei in Rahmenflachbauweise mit metallischen Blechen und einem Rahmen aus isolierendem Material ausgebildet.

Auch aus der WO 2008/048751 A2 ist ein Batteriemodul mit einer Vielzahl an nebeneinander in einem Stapel angeordneten plattenförmigen Batteriezellen bekannt, welche in einem Gehäuse untergebracht sind.

Die WO 2010/053689 A2 beschreibt eine Batterieanordnung mit einem Gehäuse und einer Mehrzahl von Lithium-Ionen-Zellen, welche nebeneinander angeordnet sind. Das Gehäuse ist zur Kühlung mit einem thermisch leitenden, elektrisch isolierenden Fluid durchströmt.

Die EP 1 530 247 A2 beschreibt eine Batterie mit mehreren Stapeln von aufeinander gestapelten Batteriezellen, wobei jeweils zwei benachbarte Batteriezellen eines Stapels mit abwechselnden Polaritäten aufeinander angeordnet und serpentinenartig elektrisch in Serie geschaltet sind. Jeder Stapel ist weiters mit dem benachbarten Stapel elektrisch in Serie geschaltet. Nachteilig ist, dass für den Zusammenbau und die Herstellung der elektrischen Verbindungen viele Einzelschritte und für die Batterie viele Einzelteile erforderlich sind.

Die WO 2010/053689 A2 beschreibt eine Batterieanordnung mit einem Gehäuse und einer Mehrzahl von Lithium-Ionen-Zellen, welche nebeneinander angeordnet sind. Das Gehäuse ist zur Kühlung mit einem thermisch leitenden, elektrisch isolierenden Fluid durchströmt.

Die WO 2011/144 372 A1 beschreibt eine Lithium-Ionen-Batteriezelle sowie ein Verfahren zur Herstellung einer elektrisch leitfähigen Kontaktierung von Terminals von Batteriezellen, wobei die Terminals mit einem Fügeverfahren, beispielsweise einem Durchsetzfügeverfahren, miteinander elektrisch leitend kontaktierend verbunden werden.

Aus der DE 10 2009 046 505 A1 ist ein Verfahren zur Verbindung eines Batteriepols einer ersten Batteriezelle mit einem Batteriepol einer zweiten Batteriezelle bekannt, wobei die Batteriepole zur Herstellung des elektrisch leitfähigen Kontaktes kraft- und formschlüssig mittels Durchsetzfügens, Clinchen oder Toxen verbunden werden.

Clinchverbindungen erfordern den freien Zugang für ein zangenartiges Clinchwerkzeug. Die zu clinchenden Teile müssen dabei beidseitig freigestellt sein, um ein unbehindertes Zugreifen und Bewegen des Clinchwerkzeuges zu ermöglichen. Clinchverbindungen haben den Vorteil, dass kein Wärmeeintrag in die zu verbindenden Teile erfolgt. Nachteilig ist allerdings, dass für das Clinchverfahren relativ viel Bearbeitungsraum zur Verfügung gestellt werden muss. Mittels Clinchen verbundene Teile bilden mitunter eine vorstehende Kante, welchen die Abmessungen des Bauteils erhöht und darüber hinaus eine Kontaktkühlung mittels eines Kühlkörpers erschwert.

Aus den Veröffentlichungen DE 10 2009 035 458 A1 und DE 10 2008 059 947 A1 sind Batterien mit einer Vielzahl von nebeneinander angeordneten zylindrischen Einzelzellen bekannt, welche mit Wärmeleitplatten Wärme leitend verbunden sind, sowie ober- und/oder unterseitig an dieser befestigt sind. Die Wärmeleitplatte weist dabei jeweils Aussparungen an den Polkontakten auf.

Die DE 10 2007 063 178 B4 beschreibt eine Batterie mit einem Batteriegehäuse und einer Wärmeleitplatte zum Temperieren der Batterie, wobei die Batterie mehrere parallel und/oder in Serie geschaltete Einzelzellen aufweist, die Wärme leitend mit der Wärmeleitplatte verbunden sind, wobei die Wärmeleitplatte im Bereich der Pole der Einzelzellen Bohrungen und/oder Einschnitte aufweist, in oder durch welche die Pole hinein- bzw. durchragen. Die Wärmeleitplatte ist dabei an einer einzigen Seite von Einzelzellen angeordnet, wobei die Einzelzellen über die zugehörigen Pole mittels einer vorgespannten Verbindung von in oder auf den Polen form- oder kraftschlüssig angeordneten Befestigungselementen jeweils an der Wärmeleitplatte befestigt sind.

Die WO 2011/145 542 A1 zeigt einen Energiespeicher mit drei mit abwechselnden Polaritäten der Zellpole nebeneinander angeordneten Stapeln von Batteriezellen, die serpentinenartig elektrisch in Serie geschaltet sind. Die JP 2010/113 888 A1 offenbart einen Energiespeicher mit zwei mit abwechselnden Polaritäten der Zellpole nebeneinander angeordneten Stapeln von Batteriezellen, wobei die Stapel über Druckplatten zusammengehalten werden. Weiters ist ein Energiespeicher mit stapelbaren Einzelzellen, die stapelübergreifend serpentinenartig elektrisch in Serie geschaltet sind, aus der EP 2 144 324 A1 bekannt.

In der WO 2010/031856 A2 wird ein Energiespeicher der eingangs erwähnten Art mit einer Verbindungsplatine zum Verbinden mehrerer Zellen einer Energiespeichereinheit beschrieben, wobei die Zellpole der Zellen um eine Ebene normal zu der Zellebene gebogen sind. Eine ähnliche Anordnung mit umgebogenen Zellpolen kann auch der EP 1 505 670 A2 oder der JP 2007-265945 A entnommen werden.

Die bekannten Wärmeleiteinrichtungen sind relativ aufwendig in der Herstellung.

Aufgabe der Erfindung ist es, mit geringem Fertigungs- und Montageaufwand einen kompakte Energiespeicher bereitzustellen.

Erfindungsgemäß wird das dadurch erreicht, dass - in Stapelrichtung betrachtet - zumindest ein Zellverbinder eine erste L-Form aufweist, wobei der zumindest eine Zellpol und der zumindest eine Zellverbinder mittels einer Durchsetzfügeverbindung miteinander verbunden sind.

Ein sehr kompakter Energiespeicher wird erreicht, wenn jeweils zwei benachbarte Batteriezellen im Wesentlichen parallel zueinander angeordnete Zellebenen aufweisen und mit abwechselnden Polaritäten der Zellpole gestapelt sind, wobei zumindest zwei Stapel von Batteriezellen nebeneinander angeordnet sind, und wobei jeweils eine Batteriezelle eines ersten Stapels und eine Batteriezelle eines zweiten Stapels in einer gemeinsamen Zellebene angeordnet und elektrisch in Serie geschaltet sind.

Vorzugsweise ist vorgesehen, dass ungleichnamige Zellpole jeweils zweier in einer Zellebene angeordneter benachbarter Batteriezellen von benachbarten Stapeln einander zugewandt sind.

Besonders vorteilhaft ist es, wenn zumindest eine erste Gruppe von in einer ersten Zellebene angeordneten Batteriezellen mit zumindest einer zweiten Gruppe von in einer zweiten Zellebene angeordneten Batteriezellen elektrisch in

Serie geschaltet ist, wobei die zweite Zellebene parallel zur ersten Zellebene, vorzugsweise benachbart zu dieser angeordnet ist.

Zumindest ein erster Stapel und zumindest ein zweiter Stapel von Batteriezellen können dabei einen gemeinsamen Batteriemodul ausbilden, wobei vorzugsweise die Batteriezellen von im gemeinsamen Batteriemodul angeordneten Stapeln

zwischen zwei jeweils für die Stapel gemeinsamen Druckplatten (Endplatten) angeordnet sind. Zumindest zwei benachbarte Batteriemodule können miteinander innerhalb des elektrischen Energiespeichers elektrisch verschaltet sein.

Vorzugsweise ist vorgesehen, dass jede Batteriezelle aus zumindest zwei parallel geschalteten Basiszellen besteht. Jede Batteriezelle kann somit eine Parallel-schaltung von zwei beispielsweise innerhalb einer Pouchzelle angeordnete Basiszellen auf (2p-Schaltung) aufweisen. Auf analoge Weise können auch 3p- und 4p-Schaltungen von Basiszellen für die Batteriezellen realisiert werden, wobei drei bzw. vier Basiszellen parallel geschaltet sind.

Die Verschaltung der Zellen findet somit nicht innerhalb eines einzigen Stapels, also längs des Stapels statt, sondern erfolgt serpentinenartig quer hin- und hergehend zwischen zwei benachbarten Stapeln. Diese Art der Schaltungsordnung hat den Vorteil, dass die Zellpole der beispielsweise als Pouch-Zellen ausgebildeten Batteriezellen bei der Montage zuerst senkrecht ausgerichtet sein können, um etwa mit dem Verfahren des Durchsetzfügens (Clinchen) direkt miteinander oder über Zellverbinder verbunden werden zu können. Danach können die Zellpole in eine bestimmte vordefinierte (für alle Zellpole gleiche) Richtung umgelegt, verbogen oder ausgerichtet werden.

Eine besonders einfache Fertigung wird ermöglicht, wenn zur Verbindung von zumindest zwei längs der Stapelrichtung aufeinander angeordneten Batteriezellen eines Stapels ein erster Zellverbinder und ein zweiter Zellverbinder miteinander durch eine Durchsetzfügeverbindung verbunden sind, wobei der erste Zellverbinder mit einem Zellpol der einen Batteriezelle und der zweite Zellverbinder mit einem Zellpol einer benachbarten Batteriezelle durch jeweils eine weitere Durchsetzfügeverbindung verbunden ist. Genauso kann vorgesehen sein, dass zur Verbindung von zumindest zwei längs der Stapelrichtung aufeinander angeordneter Stapel von Batteriezellen ein zweiter Zellverbinder und ein dritter Zellverbinder miteinander durch eine Durchsetzfügeverbindung verbunden sind, wobei der zweite Zellverbinder mit einem Zellpol des einen Stapels und der dritte Zellverbinder mit einem Zellpol des benachbarten Stapels durch jeweils eine weitere Durchsetzfügeverbindung verbunden ist. Besonders günstig für die automatisierte Herstellung der Durchsetzfügeverbindungen ist es, wenn in Stapelrichtung betrachtet - zumindest ein Zellverbinder, vorzugsweise der erste, der zweite und/oder der dritte Zellverbinder, eine - besonders vorzugsweise durch einen Biegevorgang gestaltete - erste L-Form aufweist. Weiters kann auch - quer zur Stapelrichtung, vorzugsweise in einer Draufsicht auf den Energiespeichers betrachtet - zumindest ein Zellverbinder, vorzugsweise der erste und/oder dritte Zellverbinder, eine zweite L-Form aufweist, wobei besonders vorzugsweise die zweite L-Form zwei in einer Ebene angeordnete Schenkel aufweist.

Weiters kann zur Verbindung von zumindest zwei quer zur Stapelrichtung nebeneinander angeordneten Batteriezellen ein - vorzugsweise eben ausgebildeter - vierter Zellverbinder durch eine Durchsetzfügeverbindung mit einem Zellpol der Batteriezelle des einen Stapels und durch eine weitere Durchsetzfügeverbindung mit einem Zellpol der Batteriezelle eines benachbarten Stapels verbunden sein.

Zur elektrischen Verbindung von zumindest zwei längs der Stapelrichtung aufeinander angeordneten Batteriezellen eines Stapels wird ein erster Schenkel eines L-förmigen ersten Zellverbinders mit einem Zellpol der einen Batteriezelle und ein erster Schenkel eines L-förmigen zweiten Zellverbinders mit einem Zellpol einer benachbarten Batteriezelle durch eine Durchsetzfügeverbindung verbunden, wobei vor dem Clinchvorgang die Zellpole und die ersten Schenkel parallel zu den Zellebenen und einander zumindest teilweise überlappend ausgerichtet werden. Danach werden die Zellpole samt den Zellverbindern um etwa 90°in eine Ebene normal auf die Zellebenen gleichsinnig so umgebogen, dass die zweiten Schenkel der ersten und zweiten Zellverbinder einander überlappen. Schließlich werden die normal zur Zellebene vertikal nach oben wegstehenden zweiten Schenkel der ersten und zweiten Zellverbinder durch eine weitere Durchsetzfügeverbindung miteinander verbunden.

Analog dazu wird zur elektrischen Verbindung von zumindest zwei längs der Stapelrichtung hintereinander angeordneter Batteriemodule von Batteriezellen ein erster Schenkel eines L-förmigen dritten Zellverbinders mit einem Zellpol des einen Batteriemoduls und ein erster Schenkel eines L-förmigen zweiten Zellverbinders mit einem Zellpol einer benachbarten Moduls durch eine Durchsetzfügeverbindung verbunden, wobei vor dem Clinchvorgang die Zellpole und die ersten Schenkel parallel zu den Zellebenen und einander zumindest teilweise überlappend ausgerichtet werden. Sodann werden die Zellpole samt den Zellverbindern um etwa 90°in eine Ebene normal auf die Zellebenen gleichsinnig so umgebogen, dass die zweiten Schenkel der dritten und zweiten Zellverbinder einander überlappen. Schließlich werden die vertikal nach oben von den Batteriezellen in einer Normalebene auf die Zellebenen abstehenden zweiten Schenkel der dritten und zweiten Zellverbinder durch eine weitere Durchsetzfügeverbindung miteinander verbunden.

Zur Verbindung von zumindest zwei quer zur Stapelrichtung nebeneinander angeordneter Batteriezellen wird ein - vorzugsweise eben ausgebildeter - vierter Zellverbinder durch eine Durchsetzfügeverbindung mit einem Zellpol der Batteriezelle des einen Stapels und durch eine weitere Durchsetzfügeverbindung mit einem Zellpol der Batteriezelle eines benachbarten Stapels verbunden, wobei vor dem Clinchvorgang die Zellpole und der vierte Zellverbinder parallel zu den Zellebenen und einander zumindest teilweise überlappend ausgerichtet werden. Nach dem Clinchvorgang werden die Zellpole samt dem vierten Zellverbindern um etwa 90°in eine Ebene normal auf die Zellebenen gleichsinnig umgebogen.

Alle Zellpole samt den mit diesen verbundenen Zellverbindern werden somit in dieselbe Richtung, vorzugsweise längs der Stapelrichtung, so umgebogen sind, dass die Oberseiten von umgebogenen Zellverbindern im Wesentlichen in einer Ebene parallel zur Stapelrichtung angeordnete Kontaktflächen bilden. Auf die durch die umgebogenen Zellverbinder gebildeten Kontaktflächen wird zumindest eine Wärmeleiteinrichtung aufgesetzt und vorzugsweise mit den Zellverbindern thermisch und fest, besonders vorzugsweise durch Kleben, verbunden.

Die Wärmeleiteinrichtung weist dabei zumindest eine den Batteriezellen zugewandte, vorzugsweise ebene und parallel zur Kontaktebene ausgebildete, Wärmeleitfläche aufweist, wobei die Wärmeleitfläche thermisch und fest mit den Zellverbindern verbunden ist. Vorzugsweise ist vorgesehen, dass die vorzugsweise flach ausgebildete Wärmeleitflächen in einer gemeinsamen Ebene angeordnet sind.

Dadurch kann auf fertigungstechnisch einfache Weise eine bestmögliche Temperierung des elektrischen Energiespeichers erreicht werden.

In einer ersten Ausführungsvariante kann vorgesehen sein, dass die Wärmleiteinrichtung zumindest zwei, vorzugsweise zumindest vier, quer zu den Batteriezellen, besonders vorzugsweise normal zu den Zellenebenen der Batteriezellen, durchströmte Kanäle für das Wärmeleitmedium aufweist.

Um eine thermisch gute Verbindung zwischen den Kontaktstellen und der Wärmeleiteinrichtung zu ermöglichen ist es vorteilhaft, wenn die Wärmeleiteinrichtung mit ihrer Wärmeleitfläche auf den Kontaktstellen aufgeklebt ist. Zusätzlich oder alternativ dazu kann die Wärmeleiteinrichtung auch lösbar, beispielweise mit Schrauben am Batteriemodul befestigt sein. Dabei kann beispielsweise vorgesehen sein, dass die Wärmleiteinrichtung zwischen zumindest zwei Kanälen einen Befestigungsbereich für ein vorzugsweise durch Befestigungsschrauben gebildetes Befestigungsmittel aufweist.

Die Kanäle können zwischen dem Eintrittsbereich und dem Austrittsbereich für das Wärmeleitmedium einen im wesentlichen konstanten Querschnitt aufweisen. Alternativ dazu ist es auch denkbar, die Kanäle mit unterschiedlichen Querschnittsverläufen auszubilden, um eine für den jeweiligen Fall optimale Kühlung bzw. Erwärmung der Batteriezellen zu erreichen.

Für eine gleichmäßige Temperierung der Batteriezellen ist es vorteilhaft, wenn der Eintrittsbereich und der Austrittsbereich an unterschiedlichen Stirnseiten des Energiespeichers angeordnet ist.

Größere Energiespeicher weisen - je nach Anwendungsfall - mehrere Batteriemodule auf. Dabei kann vorgesehen sein, dass die Wärmleiteinrichtung thermisch mit den Kontaktstellen von zumindest zwei in Stapelrichtung der Batteriezellen hintereinander angeordnete Batteriemodule verbunden und zur Kühlung oder Erwärmung der beiden Batteriemodule ausgelegt ist.

Eine einfache Fertigung lässt sich erzielen, wenn die Wärmleiteinrichtung aus zumindest zwei Teilen, vorzugsweise einer Unterschale und einer Oberschale fest, vorzugsweise untrennbar, zusammengefügt ist. Die Wärmeleiteinrichtung kann dabei aus Kunststoff oder aus Metall, beispielsweise Stahl oder Aluminium, gefertigt sein. Die Ober- und Unterschale der Wärmeleiteinrichtung können beispielsweise reibverschweißt oder durch ein anderes nicht lösbares Fügeverfahren unter Anwendung von Wärme und/oder Druck, etwa durch Laserschweißen oder Kleben, miteinander verbunden werden, sodass ein kompaktes Bauteil entsteht.

In einer weiteren besonders einfachen erfindungsgemäßen Ausführung ist vorgesehen, dass die Wärmleiteinrichtung aus Kunststoff besteht und vorzugsweise durch ein Extrusionsverfahren hergestellt ist. Vorteilhaft ist bei diesem Herstellungsverfahren, dass das nachträgliche Verbinden der Ober- und der Unterschale der Wärmeleiteinrichtung entfällt.

Die Lage der Wärmeleiteinrichtung kann - je nach Ausrichtung der Batteriemodule - vertikal, horizontal oder unter einem bestimmten Winkel dazu erfolgen.

Alternativ zu einer für alle Batteriezellen gemeinsamen Wärmeleiteinrichtung mit mehreren Kanälen kann auch für jeden Kanal eine eigene Wärmleiteinrichtung mit einem einzigen Kanal vorgesehen sein, welcher sich quer zu den Zellebenen über in Stapelrichtung hintereinander angeordnete Kontaktstellen erstreckt. Diese Wärmeleiteinrichtung kann einstückig ausgeführt und in einem Extrusionsverfahren hergestellt sein.

Die Erfindung wird im folgenden Anhand der Figuren näher erläutert. Es zeigen:

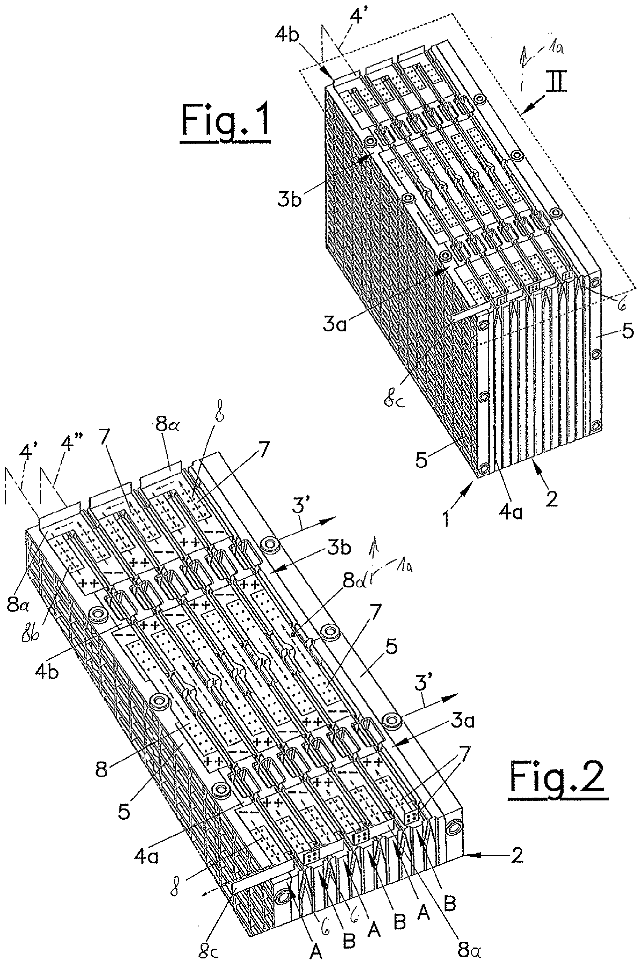

- Fig. 1: ein Batteriemodul eines erfindungsgemäßen Energiespeicher in einer Schrägansicht von oben;
- Fig. 2: das Detail II des Batteriemodul aus Fig. 1;
- Fig. 3: bis Fig. 5 das Batteriemodul in einer Vorderansicht während eines Clinchvorganges;
- Fig. 6: einen ersten Zellverbinder in einer Schrägansicht;
- Fig. 7: einen zweiten Zellverbinder in einer Schrägansicht;
- Fig. 8: einen dritten Zellverbinder in einer Schrägansicht;
- Fig. 9: einen vierten Zellverbinder;
- Fig. 10: das Batteriemodul in einer Draufsicht;
- Fig. 11: das Batteriemodul samt Wärmeleiteinrichtung in einer Seitenansicht;
- Fig. 12: den Energiespeicher samt Wärmeleiteinrichtung in einer Vorderansicht;
- Fig. 13: diesen Energiespeicher in einer Draufsicht;
- Fig. 14: den Energiespeicher in einer Schrägansicht;
- Fig. 15: eine Wärmeleiteinrichtung in einer Schrägansicht in einer ersten Ausführungsvariante;
- Fig. 16: die Wärmeleiteinrichtung in einer Vorderansicht;
- Fig. 17: die Wärmeleiteinrichtung in einem Schnitt gemäß der Linie XVII-XVII in Fig. 16;
- Fig. 18: eine Wärmeleiteinrichtung in einer Schrägansicht in einer zweiten Ausführungsvariante;
- Fig. 19: das Detail XIX aus Fig. 18;
- Fig. 20: die Wärmeleiteinrichtung aus Fig. 18 in einer Vorderansicht;
- Fig. 21: diese Wärmeleiteinrichtung in einem Schnitt gemäß der Linie XXI-XXI in Fig. 20;
- Fig. 22: eine Wärmeleiteinrichtung in einer Schrägansicht in einer dritten Ausführungsvariante;
- Fig. 23: das Detail XXIII aus Fig. 22;
- Fig. 24: die Wärmeleiteinrichtung aus Fig. 22 in einer Vorderansicht;
- Fig. 25: diese Wärmeleiteinrichtung in einem Schnitt gemäß der Linie XXV-XXV in Fig. 24;
- Fig. 26: eine Wärmeleiteinrichtung in einer Schrägansicht in einer vierten Ausführungsvariante; und
- Fig. 27: diese Wärmeleiteinrichtung in einer Draufsicht.

Funktionsgleiche Teile sind in den Ausführungsvarianten mit gleichen Bezugszeichen versehen.

Der durch eine wiederaufladbare Batterie gebildete Energiespeicher 1 weist zumindest ein Batteriemodul 2 auf. Jedes Batteriemodul 2 weist im Inneren zumindest zwei Stapel 3a, 3b von aneinandergereihten plattenförmigen Batteriezellen 4a, 4b (zum Beispiel Pouchzellen) auf, welche durch Druckplatten 5 aneinander gepresst sind. Jede Batteriezelle 4a, 4b ist als Doppelzelle ausgebildet, wobei innerhalb einer Doppelzelle eine 2p-Schaltung (Parallelschaltung der Zellpole 6 zweier Basiszellen) vorgesehen sein kann.

Jeweils zwei in Stapelrichtung 3' auf- oder nebeneinander angeordnete Batteriezellen 4a bzw. 4b jedes Stapels 3a bzw. 3b weisen im Wesentlichen parallel zueinander angeordnete Zellebenen 4', 4" auf und sind mit abwechselnden Polaritäten ++/-- gestapelt. Die Zellebenen 4', 4" sind parallel zur Hochachse 1a des Energiespeichers 1 angeordnet.

Die beiden Stapel 3a, 3b sind nebeneinander angeordnet, wobei jeweils eine Batteriezelle 4a eines ersten Stapels 3a und eine Batteriezelle 4b eines zweiten Stapels 3b in einer gemeinsamen Zellebene 4' angeordnet sind. Jeweils zwei in einer Zellebene 4' angeordnete benachbarte Batteriezellen 4a, 4b von benachbarten Stapeln 3a, 3b sind gleichgerichtet (also alle Zellpole 6 weisen in eine Richtung) angeordnet - wobei ungleichnamige Polaritäten "++" bzw. "-" benachbarter Batteriezellen 4a, 4b einander zugewandt sind - und elektrisch in Serie geschalten.

Zumindest eine erste Gruppe A von in einer ersten Zellebene 4' angeordneten Batteriezellen 4a, 4b ist mit zumindest einer zweiten Gruppe B von in einer benachbarten zweiten Zellebene 4" angeordneten Batteriezellen 4a, 4b elektrisch in Serie geschaltet, wobei de zweite Zellebene 4" parallel und benachbart zur ersten Zellebene 4' angeordnet ist.

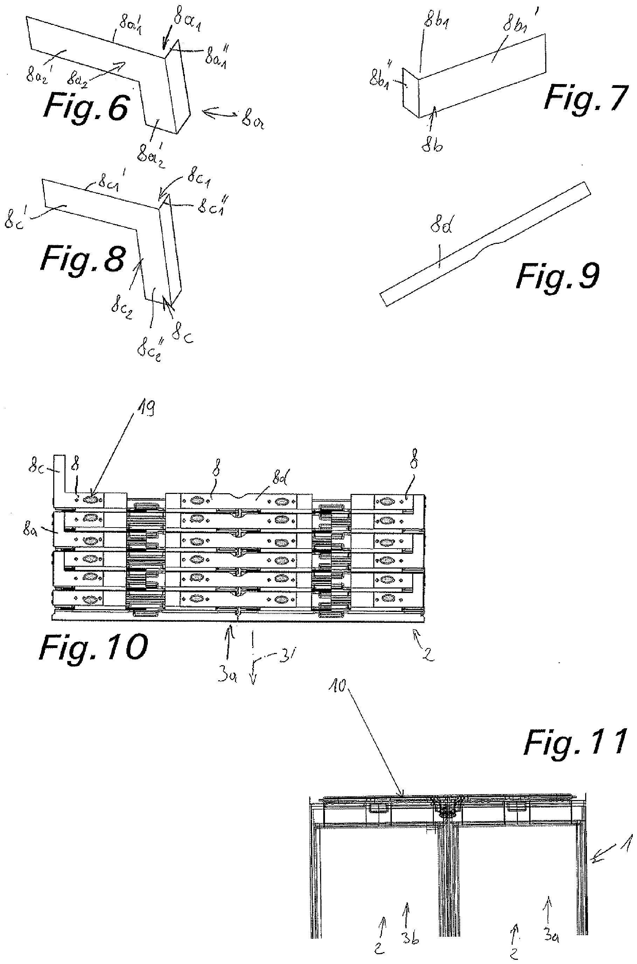

Der Energiespeicher 1 kann mehrere Batteriemodule 2 aufweisen, wobei benachbarte Batteriemodule 2 miteinander über Zellverbinder 8a, 8b, 8c, 8d elektrisch seriell oder parallel verschaltet sind. Dabei werden vier verschiedene Zellverbinder 8a, 8b, 8c, 8d eingesetzt, welche in den Fig. 6 bis Fig. 9 im Detail dargestellt sind. Zumindest ein erster Stapel 3a und zumindest ein zweiter Stapel 3b von Batteriezellen 4a, 4b können einem gemeinsamen Batteriemodul 2 angehören.

Die ersten Zellverbinder 8a und die zweiten Zellverbinder 8b dienen dazu, um die Zellpole 6 zweier in Stapelrichtung 3' benachbarter Batteriezellen 4a, 4b eines Stapels 3a, 3b elektrisch miteinander zu verbinden. Mit dritten Zellverbindern 8c können - in Kombination mit zweiten Zellverbindern 8b - jeweils Stapel 3a, 3b von Batteriezellen 4a, 4b in Stapelrichtung 3' miteinander elektrisch verbunden werden. Die ersten, zweiten und dritten Zellverbinder 8a, 8b, 8c weisen dabei jeweils eine durch einen Biegevorgang gestaltete erste L-Form 8a₁, 8b₁m, 8c₁ mit einem ersten und einem zweiten Schenkel 8a₁', 8a₁", 8b₁', 8b₁" 8c₁', 8c₁" auf. Die ersten und dritten Zellverbinder 8a, 8c weisen darüber hinaus auch noch eine zweite L-Form 8a₂, 8b₂ mit einem ersten und einem zweiten in einer Ebene angeordnete Schenkel 8a₂', 8a₂", 8c₂', 8c₂" auf.

Die im Wesentlichen flach ausgebildeten vierten Zellverbinder 8d werden verwendet, um Batteriezellen 4a, 4b innerhalb einer Gruppe A, B miteinander elektrisch zu verbinden.

Die elektrische Verbindung von miteinander verschalteten Batteriezellen 4a, 4b erfolgt erfindungsgemäß durch Durchsetzfügeverbindungen 7, beispielsweise Clinchverbindungen.

Die Verschaltung der Batteriezellen 4a, 4b findet somit nicht innerhalb eines einzigen Stapels 3a, 3b, also längs des Stapels 3a, 3b statt, sondern erfolgt serpentinenartig quer hin- und hergehend zwischen zwei benachbarten Stapeln 3a, 3b. Diese Art der Schaltungsordnung hat den Vorteil, dass die Zellpole 6 der Polaritäten ++, -- der Pouch-Zellen 4a, 4b bei der Montage zuerst senkrecht ausgerichtet sein können, um mit dem Verfahren des Durchsetzfügens (Clinchen) direkt miteinander oder über Zellverbinder 8a, 8b, 8c, 8d verbunden werden zu können. Danach können die Zellpole 6 in eine bestimmte vordefinierte (für alle Zellpole 6 gleiche) Richtung umgelegt, verbogen oder ausgerichtet werden. Dadurch ist es beispielsweise möglich, eine Wärmeleiteinrichtung 10 auf den Zellpole 6 der Batteriezellen 4a, 4b mit einer möglichst großen Fläche bzw. einem möglichst großen Querschnitt zu fixieren, beispielsweise zu verkleben.

In den Ausführungsbeispielen ist die Erfindung an Hand von 2p-Schaltungen gezeigt, welche quer zwischen den zwei Stapel 3a, 3b hin- und her erfolgen. Genauso ist es möglich über zwei Stapel 3a, 3b, sogenannte 3p- oder 4p-Schaltungen zu realisieren, bei denen statt zweier benachbarter Basiszellen in einer Batteriezelle 4a 4b eines Stapels 3a drei oder vier Basiszellen parallel geschaltet sind, wobei eine serielle Verbindung zum zweiten Stapel 3b erfolgt.

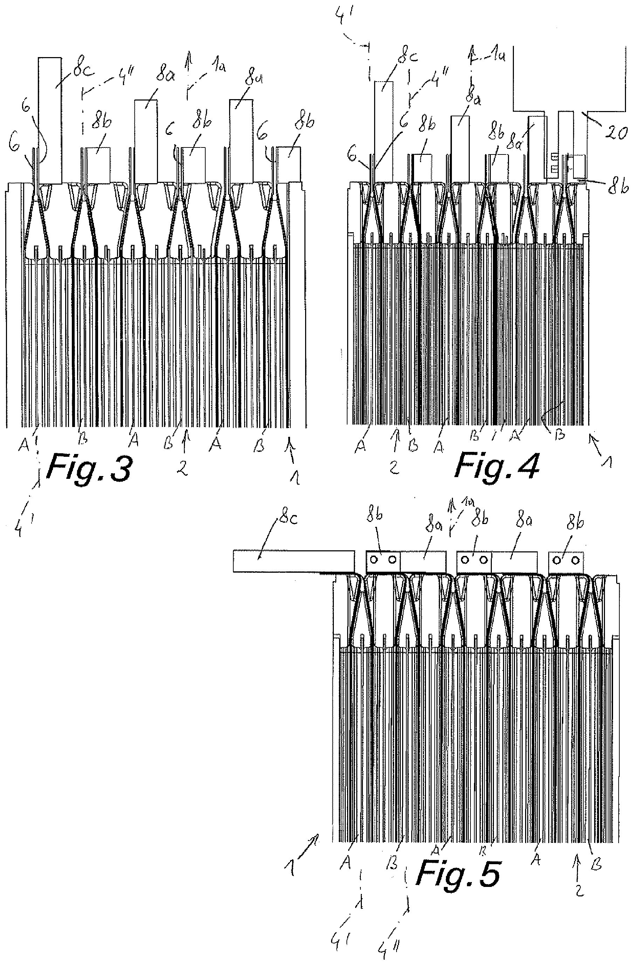

Die Fig. 3 bis Fig. 5 zeigen die Herstellung der Durchsetzfügeverbindungen 7 in drei Phasen. In dem in Fig. 3 dargestellten ersten Schritt sind die Zellpole 6 jeweils einer Doppelzelle zueinander gebogen und parallel zur Hochachse 1a des Energiespeichers 1 ausgerichtet. Die Zellverbinder 8a, 8b, 8c, 8d werden in die Fügeposition gebracht, wobei die ersten Schenkel 8a₁', 8b₁', 8c₁' der ersten L-Formen 8a₁, 8b₁, 8c₁ der Zellverbinder 8a, 8b, 8c parallel zu den Zellebenen 4', 4" unmittelbar angrenzend an den jeweiligen Zellpol 6 angeordnet und die zweiten Schenkel 8a₁", 8b₁", 8c₂" parallel zur Hochachse 1a und der Stapelrichtung 3' ausgerichtet werden. Die vierten Zellverbinder 8d werden parallel zur Zellebene 4', 4" unmittelbar neben den jeweils zu verbindenden Zellpolen 6 unterschiedlicher Polaritäten ++/-- zweier Batteriezellen 4a, 4b unterschiedlicher Stapel 3a, 3b ausgerichtet.

Im in Fig. 4 dargestellten zweiten Schritt werden die ersten Schenkel 8a₁', 8b₁', 8c₁' der ersten L-Formen 8a₁, 8b₁, 8c₁ der Zellverbinder 8a, 8b, 8c sowie die vierten Zellverbinder 8d mit den jeweiligen angrenzenden Zellpolen 6 mit einem Durchsetzfügewerkzeug 20 miteinander verbunden.

Danach werden die Zellverbinder 8a, 8b, 8c, 8d samt den verbundenen Zellpolen 6 in die gleichsinnig in der Stapelrichtung 3' um einen Biegewinkel von 90° umgebogen, so dass die ersten Schenkel 8a₁', 8b₁', 8c₁', sowie die zweite L-Form 8a₂, nun in eine Normalebene auf die Hochachse 1a geklappt werden. Durch diese Umklappbewegung kommen die zweiten Schenkel 8a₁" der ersten L-Form 8a₁ überlappend neben dem zweiten Schenkel 8b₁" des benachbarten zweiten Zellverbinders 8b zu liegen, wobei die zweiten Schenkel 8a₁" und 8b₁" parallel zur Hochachse 1a parallel zur Stapelrichtung 3' angeordnet sind. Nun werden in einem weiteren Schritt die nach oben ragenden zweiten Schenkel 8a₁" und 8b₁" mit dem Durchsetzfügewerkzeug 20 miteinander verbunden.

Durch das Umbiegen der Zellverbinder 8a, 8b, 8c, 8d bilden die Oberseiten dieser, und zwar die ersten Schenkel 8a₁', 8b₁', 8c₁', der ersten, zweiten und dritten Zellverbinder 8a, 8b, 8c, sowie die Oberseiten der vierten Zellverbinder 8d, ebene Kontaktflächen 8 aus, welche normal zu den Zellebenen 4', 4", und parallel zur Stapelrichtung 3' bzw. normal zur Hochachse 1a angeordnet sind. Die Kontaktflächen 8 befinden sich dabei im Wesentlichen in der selben Ebene ε.

Die Kontaktflächen 8 dienen zur Aufnahme zumindest einer auf die Batteriezellen 4a, 4b aufgesetzten im wesentlichen plattenförmige Wärmeleiteinrichtung 10.

Die Wärmeleiteinrichtung 10 dient zur Kühlung oder Erwärmung der Batteriezellen 4a, 4b, wobei die Wärmeleiteinrichtung 10 mit einer oder mehreren im Wesentlichen ebenen Wärmeleitflächen 14 im Bereich der Kontaktflächen 8 fest mit den Batteriezellen 4a, 4b verbunden ist.

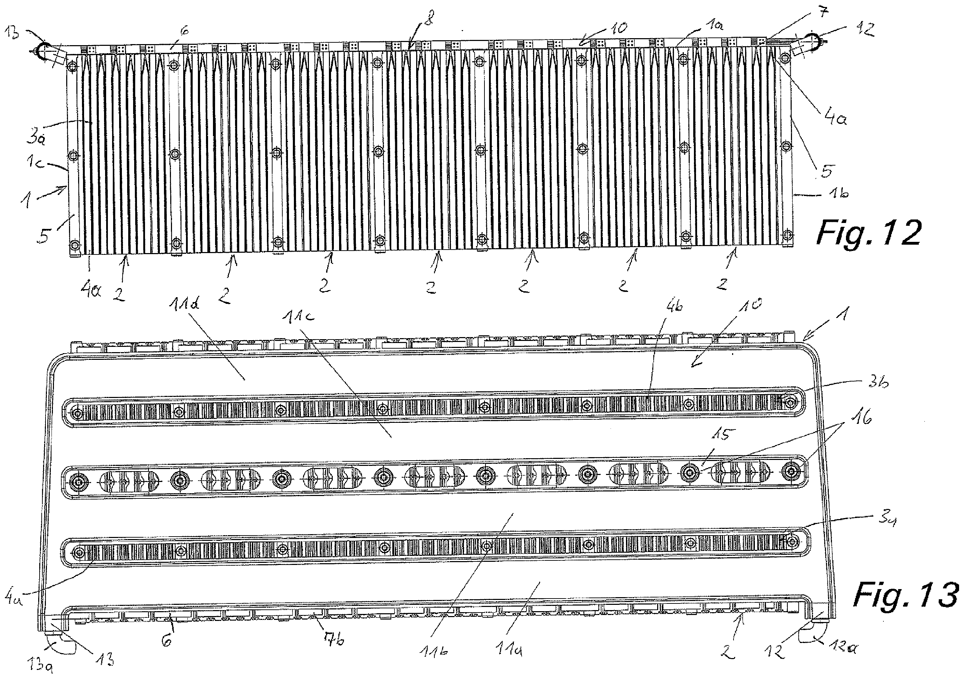

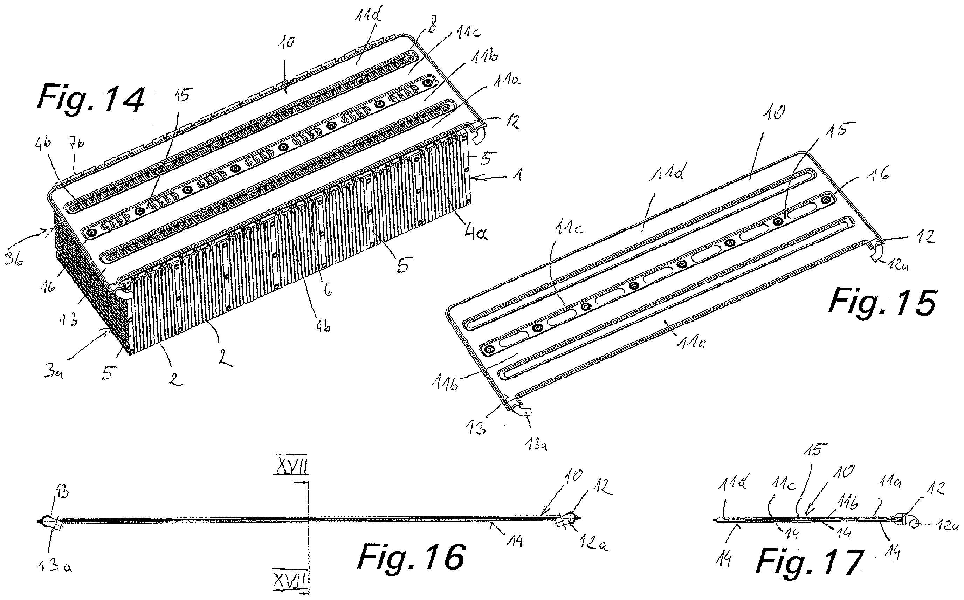

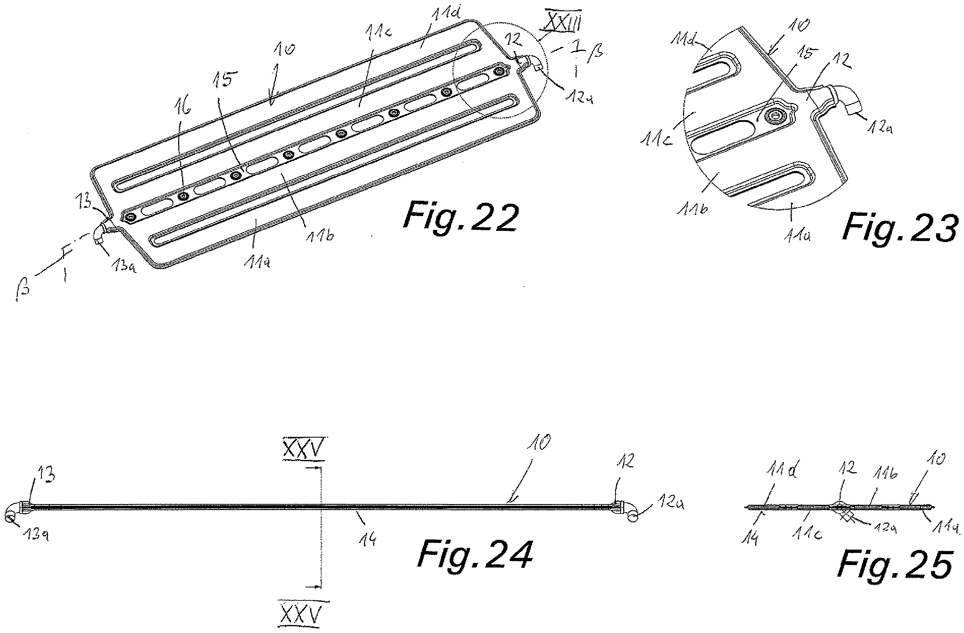

Bei den in den Fig. 12 bis Fig. 25 dargestellten Ausführungsvarianten weist die Wärmeleiteinrichtung 10 jeweils mehrere Kanäle 11a, 11b, 11c, 11d für ein gasförmiges- oder flüssiges Wärmeleitmedium auf, wobei die Kanäle 11a, 11b, 11c, 11d nebeneinander und quer zu den Zellebenen 4' der Batteriezellen 4a, 4b angeordnet sind. Die Kanäle 11a, 11b, 11c, 11d erstrecken sich zwischen einem Eintrittsbereich 12 und einem Austrittsbereich 13 für das Wärmeleitmedium in der Richtung der Stapel 3a, 3b der Batteriezellen 4a, 4b, wobei die Eintritts- und Austrittsbereiche 12, 13 im Bereich verschiedener Stirnseiten 1b ,1c des Energiespeichers 1 angeordnet sind. Die Kanäle 11a, 11b, 11c, 11d können zwischen dem Eintrittsbereich 12 und dem Austrittsbereich 13 für das Wärmeleitmedium einen im Wesentlichen konstanten Querschnitt aufweisen. An der den Batteriezellen 4a, 4b zugewandten Außenseite der Kanäle 11a, 11b, 11c, 11d der Wärmeleiteinrichtung 10 - der Unterseite der Wärmeleiteinrichtung 10 - sind die ebenen Wärmeleitflächen 14 ausgebildet.

Bei zumindest zwei in Stapelrichtung hintereinander angeordneten Batteriemodule 2 kann zumindest eine gemeinsame Wärmleiteinrichtung 10 thermisch mit den Kontaktflächen 8 der beiden Batteriemodule 2 verbunden und zur Temperierung der Batteriemodule 2 ausgebildet sein.

Die Wärmeleitflächen 14 liegen flächig auf den Kontaktflächen 8 der Zellverbinder 8a, 8b, 8c, 8d auf, so dass eine gute Wärmeleitung gewährleistet ist. Die Wärmeleitflächen 14 können dabei mit den Kontaktflächen 8 untrennbar, beispielsweise durch Kleben, verbunden sein. In Fig. 10 sind mit Bezugszeichen 19 Klebestellen auf den Kontaktflächen 8 angedeutet.

Alternativ oder zusätzlich dazu kann die Wärmeleiteinrichtung 10 über lösbare Befestigungsmittel, wie beispielsweise Befestigungsschrauben, mit dem Batteriemodul 2 verbunden sein. Dazu weist die Wärmleiteinrichtung 10 zwischen den beiden mittleren Kanälen 11b, 11c einen Befestigungsbereich 15 für ein vorzugsweise durch Befestigungsschrauben 16 gebildetes Befestigungsmittel auf.

Die in den Fig. 12 bis Fig. 25 gezeigten Ausführungen von Wärmeleiteinrichtungen 10 mit mehreren Kanälen 11a, 11b, 11c, 11d kann die Wärmeleiteinrichtung 10 jeweils durch eine Unterschale 10a und eine Oberschale 10b gebildet sein, welche beispielsweise durch Schweißen (Reibschweißen, Laserschweißen) oder Kleben untrennbar zusammengefügt sind. Dabei kann die Wärmeleiteinrichtung 10 aus Kunststoff bestehen und in einem Extrusionsverfahren hergestellt sein. Die Wärmeleiteinrichtung 10 kann aber auch aus Metall, beispielsweise Aluminium oder Stahl, bestehen. Im Falle eines metallischen Werkstoffes sind geeignete elektrische Isolierungen zu den Kontaktflächen 8 vorzusehen.

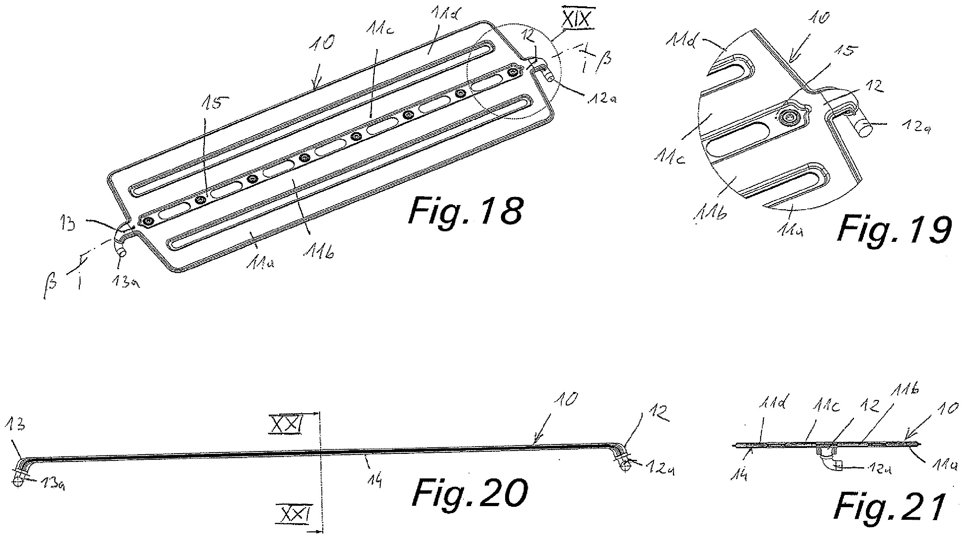

Die Fig. 12 bis Fig. 17 zeigen eine Ausführung, bei der die Eintritts- und Austrittsbereiche 12, 13 an den Ecken einer Längsseite des Energiespeichers 1 angeordnet sind. Bei den in den Fig. 18 bis Fig. 25 dargestellten Beispielen dagegen befinden sich die Eintritt- und Austrittsbereiche 12, 13 für das Wärmeleitmedium im Bereich einer Längsmittelebene β der Wärmeleiteinrichtung 10. Die Ausführungen der Fig. 18 bis Fig. 21 und Fig. 22 bis Fig. 25 unterscheiden sich dabei im wesentlichen nur durch die Orientierung der Anschlussrohre 12a, 13a an die Eintritts- und Austrittsbereiche 12, 13 der Wärmeleiteinrichtung 10.

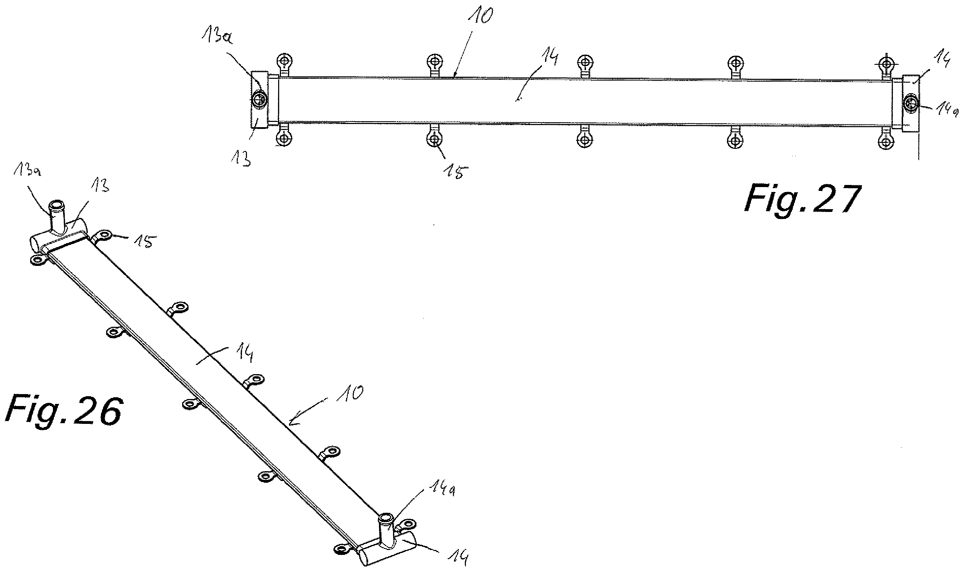

Die Fig. 26 und Fig. 27 zeigen eine weiter Ausführung einer beispielsweise Wärmeleiteinrichtung 10, welche aber nur einen einzigen Kanal 11 aufweist. Die Wärmeleiteinrichtung 10 kann einteilig ausgebildet und - mit Ausnahme von Eckverbindern mit Schlauchanschlüssen in den Eintritts- und Austrittsbereichen 12a, 13a - in einem Extrusionsvorgang hergestellt sein. Der Kanal 11 verlauft quer zu den Zellebenen 4', 4" und ist über den in Stapelrichtung 3' nebeneinander liegenden Kontaktflächen 8 eines Stapels 3a, 3b angeordnet. Dabei können mehrere Wärmeleiteinrichtungen parallel zueinander über jeweils einer Gruppe von in Stapelrichtung 3' benachbarten Kontaktflächen 8 angeordnet sein.

## Patentansprüche

1. Elektrischer Energiespeicher (1), insbesondere für ein Elektrofahrzeug, welcher eine Vielzahl an elektrisch miteinander verbundenen, insbesondere flachen und im Wesentlichen plattenförmigen Batteriezellen (4a, 4b) aufweist, welche in zumindest einem Stapel (3a, 3b) nebeneinander oder übereinander angeordnet sind, wobei die Zellpole (6) von zumindest zwei elektrisch miteinander verschalteten Batteriezellen (4a, 4b) durch zumindest einen Zellverbinder (8a, 8b, 8c, 8d) miteinander verbunden sind, wobei zumindest ein Zellpol (6) und zumindest ein Zellverbinder (8a, 8b, 8c, 8d) miteinander verbunden sind, wobei zumindest der mit dem Zellverbinder (8a, 8b, 8c, 8d) verbundene Zellpol (6) in eine erste Ebene (ε) normal zur Zellebene (4', 4") der Batteriezellen (4a, 4b) umgebogen ist, **dadurch gekennzeichnet, dass** - in Stapelrichtung (3') betrachtet - zumindest ein Zellverbinder (8a, 8b, 8c) eine erste L-Form (8a₁, 8b₁, 8c₁) aufweist, wobei der zumindest eine Zellpol (6) und der zumindest eine Zellverbinder (8a, 8b, 8c, 8d) mittels einer Durchsetzfügeverbindung (7) miteinander verbunden sind.

2. Energiespeicher (1) nach Anspruch 1, **dadurch gekennzeichnet, dass** zur Verbindung von zumindest zwei längs der Stapelrichtung (3') aufeinander angeordneten Batteriezellen (4a, 4b) eines Stapels (3a; 3b) ein erster Zellverbinder (8a) und ein zweiter Zellverbinder (8b) miteinander - vorzugsweise durch eine Durchsetzfügeverbindung (7) - verbunden sind, wobei der erste Zellverbinder (8a) mit einem Zellpol (6) der einen Batteriezelle (4a, 4b) und der zweite Zellverbinder (8b) mit einem Zellpol (6) einer benachbarten Batteriezelle (4a, 4b) - vorzugsweise durch jeweils eine weitere Durchsetzfügeverbindung (7) - verbunden ist.

3. Energiespeicher (1) nach Ansprüche 1 oder 2, **dadurch gekennzeichnet, dass** zur Verbindung von zumindest zwei längs der Stapelrichtung (3') hintereinander angeordneter Batteriemodule (2) von Batteriezellen (4a, 4b) ein zweiter Zellverbinder (8b) und ein dritter Zellverbinder (8c) miteinander - vorzugsweise durch eine Durchsetzfügeverbindung (7) - verbunden sind, wobei der zweite Zellverbinder (8b) mit einem Zellpol (6) des einen Moduls (2) und der dritte Zellverbinder (8c) mit einem Zellpol (6) des benachbarten Batteriemoduls (2) - vorzugsweise durch jeweils eine weitere Durchsetzfügeverbindung (7) - verbunden ist.

4. Energiespeicher (1) nach einem der Ansprüche 1 bis 3, **dadurch gekennzeichnet, dass** der erste, der zweite und/oder der dritte Zellverbinder (8a, 8b, 8c), eine vorzugsweise durch einen Biegevorgang gestaltete erste L-Form (8a₁, 8b₁, 8c₁) aufweist.

5. Energiespeicher (1) nach einem der Ansprüche 1 bis 4, **dadurch gekennzeichnet, dass** zur Verbindung zumindest zwei quer zur Stapelrichtung (3') nebeneinander angeordneten Batteriezellen (4a, 4b) ein - vorzugsweise eben ausgebildeter - vierter Zellverbinder (4d) - vorzugsweise durch eine Durchsetzfügeverbindung (7) - mit einem Zellpol (6) der Batteriezelle (4a; 4b) des einen Stapels (3a; 3b) und - vorzugsweise durch eine weitere Durchsetzfügeverbindung (7) - mit einem Zellpol (6) der Batteriezelle (4b; 4a) eines benachbarten Stapels (3b; 3a) verbunden ist.

6. Energiespeicher (1) nach einem der Ansprüche 1 bis 5, **dadurch gekennzeichnet, dass** - quer zur Stapelrichtung (3'), vorzugsweise in einer Draufsicht auf den Energiespeicher (1) betrachtet - zumindest ein Zellverbinder, vorzugsweise der erste und/oder dritte Zellverbinder (8a, 8c), eine zweite L-Form (8a₂, 8c₂) aufweist, wobei besonders vorzugsweise die zweite L-Form (8a₂, 8c₂) zwei in einer Ebene angeordnete Schenkel (8a₂', 8a₂") aufweist.

7. Energiespeicher (1) nach einem der Ansprüche 1 bis 6, **dadurch gekennzeichnet, dass** alle Zellpole (6) samt den mit diesen verbundenen Zellverbindern (8a, 8b, 8c, 8d) in dieselbe Richtung, vorzugsweise längs der Stapelrichtung (3'), so umgebogen sind, dass die Oberseiten von umgebogenen Zellverbindern (8a, 8b, 8c, 8d) im Wesentlichen in der ersten Ebene (ε) angeordnete Kontaktflächen (8) bilden.

8. Energiespeicher (1) nach Anspruch 7, **dadurch gekennzeichnet, dass** auf die durch die Oberseite der umgebogenen Zellverbinder (8a, 8b, 8c, 8d) gebildeten Kontaktflächen (8) zumindest eine Wärmeleiteinrichtung (10) aufgesetzt und vorzugsweise mit den Zellverbindern (8a, 8b, 8c, 8d) thermisch und fest, besonders vorzugsweise durch Kleben, verbunden ist.

9. Energiespeicher (1) nach Anspruch 8, **dadurch gekennzeichnet, dass** die Wärmeleiteinrichtung (10) zumindest eine den Batteriezellen (4a, 4b) zugewandte, vorzugsweise ebene und parallel zu den Kontaktflächen (8) ausgebildete, Wärmeleitfläche (14) aufweist, wobei die Wärmeleitfläche (14) thermisch und fest mit den Zellverbindern (8a, 8b, 8c, 8d) verbunden ist.

10. Energiespeicher (1) nach Anspruch 8 oder 9, **dadurch gekennzeichnet, dass** die Wärmleiteinrichtung (10) zumindest zwei, vorzugsweise zumindest vier, quer zu den Batteriezellen (4a, 4b), vorzugsweise normal zu den Zellenebenen (4') der Batteriezellen (4), durchströmte Kanäle (11a, 11b, 11c, 11d) für das Wärmeleitmedium aufweist, wobei vorzugsweise zwischen zumindest zwei Kanälen (11b, 11c) zumindest ein Befestigungsbereich (15) für ein beispielsweise durch Befestigungsschrauben (16) gebildetes Befestigungsmittel angeordnet ist.

11. Energiespeicher (1) nach Anspruch 8 oder 9, **dadurch gekennzeichnet, dass** der Energiespeicher (1) mehrere Wärmeleiteinrichtungen (10) aufweist, wobei jede vorzugsweise einstückig ausgeführte Wärmleiteinrichtung (10) einen einzigen quer zu den Batteriezellen (4a, 4b), vorzugsweise normal zu den Zellenebenen (4') der Batteriezellen (4), durchströmten Kanal (11) für das Wärmeleitmedium aufweist, welcher sich normal zu den Zellebenen (4', 4") über in Stapelrichtung (3') hintereinander angeordnete Kontaktflächen (8) mehrere Batteriezellen (4a, 4b) erstreckt.

12. Verfahren zur Fertigung eines elektrischen Energiespeichers (1), insbesondere für ein Elektrofahrzeug, welcher eine Vielzahl an elektrisch miteinander verbundenen, insbesondere flachen und im wesentlichen plattenförmigen Batteriezellen (4a, 4b) aufweist, welche in zumindest einem Stapel (3a, 3b) nebeneinander oder übereinander angeordnet werden, wobei die Zellpole (6) von zumindest zwei elektrisch miteinander verschalteten Batteriezellen (4a, 4b) durch zumindest einen Zellverbinder (8a, 8b, 8c, 8d) miteinander verbunden werden, und wobei zumindest ein Zellpol (6) und zumindest ein Zellverbinder (8a, 8b, 8c, 8d) in einem Fügevorgang miteinander verbunden werden, wobei nach dem Fügevorgang zumindest der mit dem Zellverbinder (8a, 8b, 8c, 8d) verbundene Zellpol (6) in eine erste Ebene (ε) normal zur Zellebene (4', 4") der Batteriezellen (4a, 4b) umgebogen wird, **dadurch gekennzeichnet, dass** zur elektrischen Verbindung von zumindest zwei längs der Stapelrichtung (3') aufeinander angeordneten Batteriezellen (4a, 4b) eines Stapels (3a; 3b) ein erster Schenkel (8a₁') eines L-förmigen ersten Zellverbinders (8a) mit einem Zellpol (6) der einen Batteriezelle (4a, 4b) und ein erster Schenkel (8b₁') eines L-förmigen zweiten Zellverbinders (8b) mit einem Zellpol (6) einer benachbarten Batteriezelle (4b, 4a) in einem Durchsetzfügevorgang (7) verbunden wird, wobei vor dem Fügevorgang die Zellpole (6) und die ersten Schenkel (8a₁', 8b₁') parallel zu den Zellebenen (4', 4") und einander zumindest teilweise überlappend ausgerichtet werden, und dass die Zellpole (6) samt den Zellverbindern (8a, 8b) um etwa 90° in eine Ebene (ε) normal auf die Zellebenen (4', 4") gleichsinnig so umgebogen werden, dass die zweite Schenkel (8a₁, 8b₁") der ersten und zweiten Zellverbinder (8a, 8b) einander überlappen, und bevorzugterweise die zweiten Schenkel (8a₁, 8b₁") der ersten und zweiten Zellverbinder (8a, 8b) - vorzugsweise in einem weiteren Durchsetzfügevorgang - miteinander verbunden werden.

13. Verfahren nach Anspruch 12, **dadurch gekennzeichnet, dass** zur elektrischen Verbindung von zumindest zwei längs der Stapelrichtung (3') aufeinander angeordneter Batteriemodule (2) von Batteriezellen (4a, 4b) ein erster Schenkel (8c₁') eines L-förmigen dritten Zellverbinders (8c) mit einem Zellpol (6) des einen Moduls (2) und ein erster Schenkel (8b₁') eines L-förmigen zweiten Zellverbinders (8b) mit einem Zellpol (6) eines benachbarten Batteriemoduls (2) in einem Fügevorgang, vorzugsweise einem Durchsetzfügevorgang verbunden wird, wobei vor dem Fügevorgang die Zellpole (6) und die ersten Schenkel (8a₁', 8c₁') parallel zu den Zellebenen (4a, 4b) und einander zumindest teilweise überlappend ausgerichtet werden, und dass die Zellpole (6) samt den Zellverbindern (8b, 8c) um etwa 90°in eine Ebene (ε) normal auf die Zellebenen (4', 4") gleichsinnig so umgebogen werden, dass die zweiten Schenkel (8c₁", 8b₁") der dritten und zweiten Zellverbinder (8c, 8b) einander überlappen, wobei vorzugsweise die zweiten Schenkel (8c₁", 8b₁") der dritten und zweiten Zellverbinder (8c, 8b) durch einen weiteren Durchsetzfügevorgang miteinander verbunden werden.

14. Verfahren nach Anspruch 12 oder 13, **dadurch gekennzeichnet, dass** zur Verbindung von zumindest zwei quer zur Stapelrichtung (3') nebeneinander angeordneten Batteriezellen (4a, 4b) ein - vorzugsweise eben ausgebildeter - vierter Zellverbinder (8d) in einem Fügevorgang, vorzugsweise einem Durchsetzfügevorgang, mit einem Zellpol (6) der Batteriezelle (4a, 4b) des einen Stapels (3a, 3b) und in einem weiteren Fügevorgang - vorzugsweise einem weiteren Durchsetzfügevorgang - mit einem Zellpol (6) der Batteriezelle (4b, 4a) eines benachbarten Stapels (3b, 3a) verbunden wird, wobei vor dem Clinchvorgang die Zellpole (6) und der vierte Zellverbinder (8d) parallel zu den Zellebenen (4', 4") und einander zumindest teilweise überlappend ausgerichtet werden, und dass die Zellpole (6) samt dem vierten Zellverbindern (8d) um etwa 90°in eine Ebene (ε) normal auf die Zellebenen (4', 4") gleichsinnig umgebogen werden.

15. Verfahren nach einem der Ansprüche 12 bis 14, **dadurch gekennzeichnet, dass** auf durch die umgebogenen Zellverbinder (8a, 8b, 8c, 8d) gebildete Kontaktflächen (8) zumindest eine Wärmeleiteinrichtung (10) aufgesetzt und mit den Zellverbindern (8a, 8b, 8c, 8d) thermisch leitend, besonders vorzugsweise durch Kleben, verbunden wird.

## Claims

1. An electrical energy accumulator (1), in particular for an electric vehicle, which has a plurality of battery cells (4a, 4b), which are electrically connected to one another, and are in particular flat and essentially plate-shaped, and which are arranged in at least one stack (3a, 3b) adjacent to one another or one on top of another, wherein the cell poles (6) of at least two battery cells (4a, 4b), which are electrically interconnected with one another, are connected to one another by at least one cell connector (8a, 8b, 8c, 8d), wherein at least one cell pole (6) and at least one cell connector (8a, 8b, 8c, 8d) are connected to one another, wherein at least the cell pole (6) connected to the cell connector (8a, 8b, 8c, 8d) is bent over into a first plane (ε) normal to the cell plane (4', 4") of the battery cells (4a, 4b) **characterised in that** - considered in the stack direction (3') - at least one cell connector (8a, 8b, 8c) has a first L-shape (8a₁, 8b₁, 8c₁), wherein the at least one cell pole (6) and the at least one cell connector (8a, 8b, 8c, 8d) are connected to one another by means of a clinching connection (7).

2. The energy accumulator (1) according to claim 1, **characterised in that**, to connect at least two battery cells (4a, 4b) of a stack (3a, 3b), which are arranged one on top of another along the stack direction (3'), a first cell connector (8a) and a second cell connector (8b) are connected to one another - preferably by a clinching connection (7) - wherein the first cell connector (8a) is connected to a cell pole (6) of one battery cell (4a, 4b) and the second cell connector (8b) is connected to a cell pole (6) of an adjacent battery cell (4a, 4b) - preferably by a further clinching connection (7) in each case.

3. The energy accumulator (1) according to claim 1 or 2, **characterised in that**, to connect at least two battery modules (2) of battery cells (4a, 4b), which are arranged one behind another along the stack direction (3'), a second cell connector (8b) and a third cell connector (8c) are connected to one another - preferably by a clinching connection (7) - wherein the second cell connector (8b) is connected to a cell pole (6) of one module (2) and the third cell connector (8c) is connected to a cell pole (6) of the adjacent battery module (2) - preferably by a further clinching connection (7) in each case.

4. The energy accumulator (1) according to one of claims 1 to 3, **characterised in that** the first, the second, and/or the third cell connector (8a, 8b, 8c), has a first L-shape (8a₁, 8b₁, 8c₁), which is preferably formed by a bending operation.

5. The energy accumulator (1) according to one of claims 1 to 4, **characterised in that**, to connect at least two battery cells (4a, 4b) arranged adjacent to one another transversely to the stack direction (3'), a fourth cell connector (4d) - which is preferably implemented as flat - is connected - preferably by a clinching connection (7) - to a cell pole (6) of the battery cell (4a, 4b) of one stack (3a, 3b) and is connected - preferably by a further clinching connection (7) - to a cell pole (6) of the battery cell (4b, 4a) of an adjacent stack (3b, 3a).

6. The energy accumulator (1) according to one of claims 1 to 5, **characterised in that** - transversely to the stack direction (3'), preferably considered in a top view of the energy accumulator (1) - at least one cell connector, preferably the first and/or third cell connector (8a, 8c), has a second L-shape (8a₂, 8c₂), wherein particularly preferably the second L-shape (8a₂, 8c₂) has two legs (8a₂', 8a₂") arranged in a plane.

7. The energy accumulator (1) according to one of claims 1 to 6, **characterised in that** all cell poles (6), together with the cell connectors (8a, 8b, 8c, 8d) connected thereto, are bent over in the same direction, preferably along the stack direction (3'), so that the top sides of bent-over cell connectors (8a, 8b, 8c, 8d) form contact surfaces (8) essentially arranged in the first plane (ε).

8. The energy accumulator (1) according to claim 7, **characterised in that** at least one heat conduction unit (10) is placed on the contact surfaces (8) formed by the top sides of the bent-over cell connectors (8a, 8b, 8c, 8d), and is preferably thermally and fixedly connected to the cell connectors (8a, 8b, 8c, 8d), particularly preferably by gluing.

9. The energy accumulator (1) according to claim 8, **characterised in that** the heat conduction unit (10) has at least one heat conduction surface (14), which faces toward the battery cells (4a, 4b), and is preferably implemented as flat and parallel to the contact surfaces (8), wherein the heat conduction surface (14) is thermally and fixedly connected to the cell connectors (8a, 8b, 8c, 8d).

10. The energy accumulator (1) according to claim 8 or 9, **characterised in that** the heat conduction unit (10) has at least two, preferably at least four channels (11a, 11b, 11c, 11d) for the heat conduction medium, preferably having flow through them normal to the cell planes (4') of the battery cells (4), wherein preferably at least one fastening region for a fastening means formed by fastening screws (16), for example (15) is arranged between at least two channels (11b, 11c).

11. The energy accumulator (1) according to claim 8 or 9, **characterised in that** the energy accumulator (1) has multiple heat conduction units (10), wherein each heat conduction unit (10), which is preferably embodied in one piece, has a single channel (11) for flow of the heat conduction unit through it transversely to the battery cells (4a, 4b), preferably normal to the cell planes (4') of the battery cells (4), which extends normal to the cell planes (4', 4") over contact surfaces (8) of multiple battery cells (4a, 4b) arranged one behind another in the stack direction (3').

12. A method for manufacturing an electrical energy accumulator (1), in particular for an electric vehicle, which has a plurality of battery cells (4a, 4b), which are electrically connected to one another, and are in particular flat and essentially plate-shaped, and which are arranged adjacent to one another or one on top of another in at least one stack (3a, 3b), wherein the cell poles (6) of at least two battery cells (4a, 4b), which are electrically interconnected to one another, are connected by at least one cell connector (8a, 8b, 8c, 8d), and wherein at least one cell pole (6) and at least one cell connector (8a, 8b, 8c, 8d) are connected to one another in a joining operation, wherein after the joining operation, at least the cell pole (6) connected to the cell connector (8a, 8b, 8c, 8d) is bent over in a first plane (ε) normal to the cell plane (4', 4") of the battery cells (4a, 4b), **characterised in that**, to electrically connect at least two battery cells (4a, 4b) of a stack (3a, 3b), which are arranged one on top of another along the stack direction (3'), a first leg (8a₁') of an L-shaped first cell connector (8a) is connected to a cell pole (6) of one battery cell (4a, 4b) and a first leg (8b₁') of an L-shaped second cell connector (8b) is connected to a cell pole (6) of an adjacent battery cell (4b, 4a) in a clinching operation (7), wherein before the joining operation, the cell poles (6) and the first legs (8a₁', 8b₁') are aligned parallel to the cell planes (4', 4") and at least partially overlapping one another, and the cell poles (6) together with the cell connectors (8a, 8b) are bent over in the same direction by approximately 90° into a plane (ε) normal to the cell planes (4', 4") so that the second legs (8a₁", 8b₁") of the first and second cell connectors (8a, 8b) overlap one another, and preferably the second legs (8a₁", 8b₁") of the first and second cell connectors (8a, 8b) are connected to one another - preferably in a further clinching operation.

13. The method according to claim 12, **characterised in that**, to electrically connect at least two battery modules (2), which are arranged one on top of another along the stack direction (3'), of battery cells (4a, 4b), a first leg (8c₁') of an L-shaped third cell connector (8c) is connected to a cell pole (6) of one module (2) and a first leg (8b₁') of an L-shaped second cell connector (8b) is connected to a cell pole (6) of an adjacent battery module (2) in a joining operation, preferably a clinching operation, wherein before the joining operation, the cell poles (6) and the first legs (8a₁', 8c₁') are aligned parallel to the cell planes (4a, 4b) and at least partially overlapping one another, and the cell poles (6) including the cell connectors (8b, 8c) are bent over in the same direction by approximately 90° into a plane (ε) normal to the cell planes (4', 4"), so that the second legs (8c₁", 8b₁") of the third and second cell connectors (8c, 8b) overlap one another, wherein preferably the second legs (8c₁", 8b₁") of the third and second cell connectors (8c, 8b) are connected to one another by a further clinching operation.

14. The method according to claim 12 to 13, **characterised in that**, to connect at least two battery cells (4a, 4b), which are arranged adjacent to one another transversely to the stack direction (3'), a fourth cell connector (8d) - which is preferably implemented as flat - is connected in a joining operation, preferably a clinching operation, to a cell pole (6) of the battery cell (4a, 4b) of one stack (3a, 3b) and is connected in a further joining operation - preferably a further clinching operation - to a cell pole (6) of the battery cell (4b, 4a) of an adjacent stack (3b, 3a), wherein before the clinching operation, the cell poles (6) and the fourth cell connector (8d) are aligned parallel to the cell planes (4', 4") and at least partially overlapping one another, and the cell poles (6) together with the fourth cell connectors (8d) are bent over in the same direction by approximately 90° into a plane (ε) normal to the cell planes (4', 4").

15. The method according to one of claims 12 to 14, **characterised in that** at least one heat conduction unit (10) is placed on contact surfaces (8) formed by the bent-over cell connectors (8a, 8b, 8c, 8d) and is connected to the cell connectors (8a, 8b, 8c, 8d) in a thermally conductive manner, particularly preferably by gluing.

## Revendications

1. Accumulateur d'énergie électrique (1) en particulier destiné à un véhicule électrique comportant un ensemble de cellules de batterie (4a, 4b) reliées électriquement les unes aux autres, en particulier plates et essentiellement en forme de plaques qui sont installées côte à côte ou les unes sur les autres selon au moins une pile (3a, 3b), les pôles (6) d'au moins deux cellules de batterie (4a, 4b) branchées électriquement l'une sur l'autre étant reliés par au moins un connecteur de cellule (8a, 8b, 8c, 8d), au moins un pôle de cellule (6) et au moins un connecteur de cellule (8a, 8b, 8c, 8d) étant reliés, au moins le pôle de cellule (6) relié au connecteur de cellule (8a, 8b, 8c, 8d) étant replié dans un premier plan (ε) perpendiculaire au plan (4', 4") des cellules de batterie (4a, 4b), **caractérisé en ce que**
- considéré dans la direction de pile (3') - au moins un connecteur de cellule (8a, 8b, 8c) a une première forme en L (8a₁, 8b₁, 8c₁), le pôle de cellule (6) et le connecteur de cellule (8a, 8b, 8c, 8d) étant reliés au moyen d'un assemblage par clinchage (7).

2. Accumulateur d'énergie (1) conforme à la revendication 1, **caractérisé en ce que**
pour permettre la liaison d'au moins deux cellules de batterie (4a, 4b) d'une pile (3a, 3b) installées l'une sur l'autre le long de la direction de la pile (3'), un premier connecteur de cellule (8a) et un second connecteur de cellule (8b) sont reliés -de préférence par un assemblage par clinchage (7)- , le premier connecteur de cellule (8a) étant relié à un pôle de cellule (6) de l'une des cellules de batterie (4a, 4b) et le second connecteur de cellule (8b) étant relié à un pôle de cellule (6) d'une cellule de batterie voisine (4a, 4b) -de préférence par respectivement un autre assemblage par clinchage (7)-.

3. Accumulateur d'énergie (1) conforme à la revendication 1 ou 2, **caractérisé en ce que**
pour permettre la liaison d'au moins deux modules (2) de cellules de batterie (4a, 4b) installés l'un derrière l'autre le long de la direction de pile (3'), un second connecteur de cellule (8b) et un troisième connecteur de cellule (8c) sont reliés -de préférence par un assemblage par clinchage (7)-, le second connecteur de cellule (8b) étant relié à un pôle de cellule (6) de l'un des modules (2) et le troisième connecteur de cellule (8c) étant relié à un pôle de cellule (6) du module de batterie (2) voisin -de préférence par respectivement un autre un assemblage par clinchage (7)-.

4. Accumulateur d'énergie (1) conforme à 1(une des revendications 1 à 3,
**caractérisé en ce que**
le premier, le second et/ou le troisième connecteur de cellule (8a, 8b, 8c) a une première forme en L (8a₁, 8b₁, 8c₁) obtenue de préférence par un processus de flexion.

5. Accumulateur d'énergie (1) conforme à l'une des revendications 1 à 4,
**caractérisé en ce que**
pour permettre la liaison d'au moins deux cellules de batterie (4a, 4b) installées côte à côte transversalement à la direction de pile (3'), un quatrième connecteur de cellule (4d) -de préférence plat- est relié -de préférence par un assemblage par clinchage (7)- avec un pôle de cellule (6) de la cellule de batterie (4a, 4b) d'une pile (3a, 3b) et, -de préférence par un autre assemblage par clinchage (7)- avec un pôle de cellule (6) de la cellule de batterie (4b, 4a) d'une pile (3b, 3a) voisine.

6. Accumulateur d'énergie (1) conforme à l'une des revendications 1 à 5,
**caractérisé en ce que**
- transversalement à la direction de pile (3'), de préférence selon une vue de dessus de l'accumulateur d'énergie (1) au moins un connecteur de cellule, de préférence le premier et/ou le troisième connecteur(s) de cellule (8a, 8c) a une seconde forme en L (8a₂, 8c₂), et, de façon particulièrement préférentielle, la seconde forme en L (8a₂, 8c₂) comprend deux branches (8a₂', 8a₂") situées dans un plan.

7. Accumulateur d'énergie (1) conforme à l'une des revendications 1 à 6,
**caractérisé en ce que**
tous les pôles de cellule (6) avec les connecteurs de cellule (8a, 8b, 8c, 8d) reliés à ces pôles sont repliés dans la même direction, de préférence le long de la direction de pile (3') de sorte que les faces supérieures des connecteurs de cellule (8a, 8b, 8c, 8d) repliés forment des surfaces de contact (8) essentiellement situées dans le premier plan (ε).

8. Accumulateur d'énergie (1) conforme à la revendication 7, **caractérisé en ce que**
sur les surfaces de contact (8) formées par la face supérieure du connecteur de cellule replié (8a, 8b, 8c, 8d) est appliqué au moins un dispositif thermiquement conducteur (10) qui est de préférence relié aux connecteurs de cellule (8a, 8b, 8c, 8d) thermiquement et solidairement, et de façon particulièrement préférentielle, par collage.

9. Accumulateur d'énergie (1) conforme à la revendication 8, **caractérisé en ce que**
le dispositif thermiquement conducteur (10) comporte au moins une surface thermiquement conductrice (14) tournée vers les cellules de batterie (4a, 4b), et de préférence plate et parallèle aux surfaces de contact (8), la surface thermiquement conductrice (14) étant reliée thermiquement et solidairement aux connecteurs de cellule (8a, 8b, 8c, 8d).

10. Accumulateur d'énergie (1) conforme à la revendication 8 ou 9, **caractérisé en ce que**
le dispositif thermiquement conducteur (10) comporte au moins deux, de préférence au moins quatre canaux (11a, 11b, 11c, 11 d) de circulation du fluide caloporteur traversés transversalement aux cellules de batterie (4a, 4b), de préférence perpendiculairement au plan (4') des cellules de batterie (4), et de préférence, entre au moins deux canaux (11b, 11c) est installé au moins une zone de fixation (15) pour des moyens de fixation, notamment constitués par des vis de fixation (16).

11. Accumulateur d'énergie (1) conforme à la revendication 8 ou 9, **caractérisé en ce qu'**il
comprend plusieurs dispositifs thermiquement conducteurs (10), chaque dispositif thermiquement conducteur (10) qui est de préférence réalisé en une seule pièce comportant un seul canal (11) de circulation du fluide caloporteur traversé transversalement aux cellules de batterie (4a, 4b), de préférence perpendiculaire au plan (4') des cellules de batterie (4), qui s'étend perpendiculairement aux plans de cellule (4', 4") sur des surfaces de contact (8) de plusieurs cellules de batterie (4a, 4b) situées les unes derrières les autres dans la direction de pile (3').

12. Procédé de fabrication d'un accumulateur d'énergie électrique (1), en particulier destiné à un véhicule électrique comprenant un ensemble de cellules de batterie (4a, 4b) reliées électriquement les unes aux autres, en particulier plates et essentiellement en forme de plaque qui sont installées côte à côte ou les unes au-dessus des autres selon au moins une pile (3a, 3b), les pôles (6) d'au moins deux cellules de batterie (4a, 4b) branchées électriquement l'une sur l'autre étant reliés par au moins un connecteur de cellule (8a, 8b, 8c, 8d), au moins un pôle de cellule (6) et au moins un connecteur de cellule (8a, 8b, 8c, 8d) étant relié par un processus d'assemblage, et après le processus d'assemblage, au moins le pôle de cellule (6) relié au connecteur de cellule (8a, 8b, 8c, 8d) étant replié dans un premier plan (ε) perpendiculaire au plan (4', 4") des cellules de batterie (4a, 4b),
**caractérisé en ce que**
pour permettre la liaison électrique d'au moins deux cellules de batterie (4a, 4b) d'une pile (3a, 3b) disposées l'une sur l'autre le long de la direction de pile (3') une première branche (8a₁') d'un premier connecteur de cellule (8a) en forme de L est relié à un pôle (6) d'une cellule de batterie (4a, 4b), et une première branche (8b₁') d'un second connecteur de cellule (8b) en forme de L est relié à un pôle (6) d'une cellule de batterie (4b, 4a) voisine, par un processus d'assemblage par clinchage (7), avant le processus d'assemblage, les pôles de cellule (6) et les premières branches (8a₁', 8b₁') étant orientés parallèlement au plan de cellule (4', 4") et se chevauchant au moins partiellement, et **en ce que** les pôles de cellule (6) avec les connecteurs de cellule (8a, 8b) sont repliés dans le même sens d'environ 90° dans un plan (ε) perpendiculaire aux plans de cellule (4', 4"), de sorte que les secondes branches (8a₁", 8b₁") du premier et du second connecteurs de cellule (8a, 8b) se chevauchent, et, de façon plus préférentielle, les secondes branches (8a₁", 8b₁") du premier et du second connecteurs de cellule (8a, 8b) sont reliées -de préférence par un autre processus d'assemblage par clinchage-.

13. Procédé conforme à la revendication 12,
**caractérisé en ce que**
pour permettre la liaison électrique d'au moins deux modules (2) de cellules de batterie (4a, 4b) situés l'un sur l'autre le long de la direction de pile (3'), une première branche (8c₁') d'un troisième connecteur de cellule (8c) en forme de L est reliée à un pôle de cellule (6) de l'un des modules (2) et une première branche (8b₁') d'un second connecteur de cellule (8b) en forme de L est reliée à un pôle de cellule (6) d'un module de batterie (2) voisin, par un processus d'assemblage, de préférence un processus d'assemblage par clinchage, avant le processus d'assemblage les pôles de cellule (6) et les premières branches (8a₁', 8c₁') étant orientés parallèlement au plan de cellule (4a, 4b) et se chevauchant au moins partiellement, et **en ce que** les pôles de cellules (6) avec les connecteurs de cellule (8b, 8c) sont repliés dans le même sens d'environ 90° dans un plan (ε) perpendiculaire au plan de cellules (4a, 4b) de sorte que les secondes branches (8c₁", 8b₁") du troisième et du second connecteurs de cellule (8c, 8b) se chevauchent, et de préférence, les secondes branches (8c₁", 8b₁") du troisième et du second connecteur de cellule (8c, 8b) sont reliées par un autre processus d'assemblage par clinchage.

14. Procédé conforme à la revendication 12 ou 13,
**caractérisé en ce que**
pour permettre la liaison d'au moins deux cellules de batterie (4a, 4b) disposées côte à côte transversalement à la direction de pile (3'), un quatrième connecteur de cellule (8d) -de préférence plat- est relié par un processus d'assemblage, de préférence un processus d'assemblage par clinchage, avec un pôle (6) de la cellule de batterie (4a, 4b) de l'une des piles (3a, 3b), et par un autre processus d'assemblage- de préférence un autre processus d'assemblage par clinchage- avec un pôle (6) de la cellule de batterie (4b, 4a) d'une pile voisine (3b, 3a), avant le processus de clinchage, les pôles de cellule (6) et le quatrième connecteur de cellule (8d) étant orientés parallèlement au plan des cellules (4', 4") et se chevauchant au moins partiellement, et **en ce que** les pôles de cellule (6) avec le quatrième connecteur de cellule (8d) sont repliés dans le même sens d'environ 90° dans un plan (ε) perpendiculaire au plan des cellules (4', 4").

15. Procédé conforme à l'une des revendications 12 à 14,
**caractérisé en ce que**
sur des surfaces de contact (8) formées par les connecteurs de cellule (8a, 8b, 8c, 8d) repliés, est appliqué au moins un dispositif thermiquement conducteur (10) qui est relié aux connecteurs de cellule (8a, 8b, 8c, 8d) de façon thermiquement conductrice, de préférence par collage.
